# EUROPÄISCHE PATENTSCHRIFT

(11) **EP 2 937 560 B1**
(45) Veröffentlichungstag und Bekanntmachung des Hinweises auf die Patenterteilung: **06.06.2018**
(21) Anmeldenummer: 15164828.4
(22) Anmeldetag: 23.04.2015
(51) Int. Cl.: F03D 80/00

(54) **WINDENERGIEANLAGEN-DIAGNOSEVORRICHTUNG FÜR GENERATORKOMPONENTEN**
WIND ENERGY SYSTEM DIAGNOSIS DEVICE FOR GENERATOR COMPONENTS
DISPOSITIF DE DIAGNOSTIC D'ÉOLIENNES POUR COMPOSANTS DU GÉNÉRATEUR

(30) Priorität: 23.04.2014 DE 102014207612
(43) Veröffentlichungstag der Anmeldung: 28.10.2015
(73) Patentinhaber: Senvion GmbH, 22297 Hamburg (DE)
(72) Erfinder: Falb, Martin, 24105 Kiel (DE); Nietmann, Lars, 25767 Albersdorf (DE)
(74) Vertreter: Glawe, Delfs, Moll

(56) Entgegenhaltungen:
- DE-A1-102008 049 530
- US-A1- 2007 140 847
- T Verbruggen: "wind turbine operation & maintenance based on condition monitoring", , 30. April 2003 (2003-04-30), XP055021054, Gefunden im Internet: URL:ftp://ecn.nl/pub/www/library/report/20 03/c03047.pdf [gefunden am 2012-03-06]
- C Walford ET AL: "condition monitoring of wind turbines Technology overview, seeded-fault testing, and cost-benefit analysis", , 6. Dezember 2006 (2006-12-06), XP055021045, Gefunden im Internet: URL:http://www.apere.org/manager/docnum/do c/doc1262_Monitoring.fiche66.pdf [gefunden am 2012-03-06]

## Beschreibung

Die Erfindung betrifft eine Windenergieanlagen-Diagnosevorrichtung zur Diagnose von mechanischen Schäden an Generatorkomponenten einer Windenergieanlage.

Die Komponenten eines Generators einer Windenergieanlage unterliegen starken mechanischen Belastungen, die Schäden an den Generatorkomponenten bewirken können. Wenn diese beschädigten Generatorkomponenten nicht ausgetauscht werden, können Folgeschäden auftreten, deren Beseitigung mit hohen Kosten verbunden ist. Daher ist es notwendig, möglichst früh von beschädigten Generatorkomponenten zu erfahren, um diese vor Auftreten von Folgeschäden auszutauschen. Die beschädigten Generatorkomponenten bewirken Schwingungen, die sich in Schwankungen der Drehzahl des Generators äußern. Diese Schwingungen können z. B. an den Generatorlagern erfasst werden.

Bekannte Windenergieanlagen-Diagnosevorrichtungen umfassen Schwingungssensoren an den Generatorlagern. Bedingt durch die eingeschränkten Positionierungsmöglichkeiten der Schwingungssensoren an den Generatorlagern, können diese Sensoren hauptsächlich radiale Schwingungen erfassen. Axiale Schwingungen werden nur teilweise oder gar nicht erfasst. Damit bieten bekannte Schwingungssensoren lediglich begrenzte Diagnosemöglichkeiten in Bezug auf mechanische Schäden aufgrund von axialen Schwingungen. Eine ähnliche Diagnosevorrichtung, welche zur Überwachung einer Triebstrangkomponente ausgestaltet ist und ebenfalls an diesem Nachteil leidet, ist aus der DE 10 2008 049 530 A1 bekannt.

Der Erfindung liegt die Aufgabe zu Grunde, eine verbesserte Windenergieanlagen-Diagnosevorrichtung zu schaffen, welche die Vorhersagemöglichkeit von durch Schwingungen verursachten mechanischen Schäden an Generatorkomponenten erweitert.

Die erfindungsgemäße Lösung liegt in einer Windenergieanlagen-Diagnosevorrichtung und einem Verfahren gemäß der unabhängigen Ansprüche. Vorteilhafte Weiterbildungen sind Gegenstand der abhängigen Ansprüche.

Bei einer Windenergieanlagen-Diagnosevorrichtung zur Diagnose von mechanischen Schäden an Generatorkomponenten mindestens einer Windenergieanlage umfassend mindestens einen Drehzahlsensor zur Ermittlung eines Zeitverlaufs der Drehzahl eines Generators einer Windenergieanlage, wobei der Drehzahlsensor mindestens einen Drehzahlsignalausgang zur Ausgabe des ermittelten Zeitverlaufs der Drehzahl aufweist, ist erfindungsgemäß vorgesehen, dass die Windenergieanlagen-Diagnosevorrichtung ein Frequenzanalysemodul mit mindestens einem Drehzahlsignaleingang, der mit dem Drehzahlsignalausgang über eine Drehzahlsignalleitung verbunden ist, und einem Frequenzspektrumsignalausgang zur Ausgabe eines Frequenzspektrums, wobei das Frequenzanalysemodul zur Bestimmung eines Frequenzspektrums aus dem ermittelten Zeitverlauf der Drehzahl ausgebildet ist; und ein Komparatorelement aufweist, das einen Frequenzspektrumsignaleingang aufweist, der mit dem Frequenzspektrumsignalausgang über eine Frequenzspektrumsignalleitung verbunden ist, wobei das Komparatorelement zum Vergleich eines Frequenzspektrums mit einem vorgegebenen Normfrequenzspektrum und zur Diagnose von mechanischen Schäden an Generatorkomponenten auf Grund des Vergleichs ausgebildet ist.

Zunächst seien einige Begriffe näher erläutert:
Unter einer Signalleitung werden eine physische Signalleitung sowie eine Funksignalleitung verstanden. Die physische Signalleitung kann damit beispielsweise aus einem Kupferkabel, einem Glasfaserkabel oder einer Metallschiene bestehen. Die Funksignalleitung kann zum Beispiel aus einer gesicherten Funkverbindung bestehen.

Unter einem Zeitverlauf der Drehzahl wird eine Vielzahl von fortlaufend ermittelten Drehzahlwerten verstanden. Das Zeitintervall zwischen den einzelnen zu ermittelnden Werten kann dabei beliebig gewählt werden. Kleine Zeitintervalle bewirken eine höhere zeitliche Auflösung und damit eine genauere Frequenzanalyse.

Unter einem Frequenzanalysemodul wird ein Modul verstanden, das aus einem Drehzahlsignal bzw. einem Schwingungssignal die zu Grunde liegenden Frequenzen ermittelt. Das Frequenzanalysemodul kann z. B. ein Fast-Fourier-Transformations-Modul sein, das eine Fourier-Transformation der Schwingung mittels schneller Algorithmen durchführt.

Der Erfindung liegt die Verknüpfung zweier Erkenntnisse zu Grunde, nämlich dass zum einen beschädigte Generatorkomponenten axiale Schwingungen am Generator generieren und zum anderen diese axialen Schwingungen zu Schwankungen der Drehzahl des Generators führen. Die Drehzahl wird dabei von standardmäßig in Windenergieanlagen vorgesehenen Drehzahlsensoren, wie z. B. den Inkrementalgebern der Umrichter, fortlaufend bestimmt. Die der Schwankungen der Drehzahl unterliegenden Frequenzen können mittels einer Frequenzanalyse der während eines bestimmten Zeitraums ermittelten Drehzahl bestimmt werden. Dazu wird ein Zeitverlauf der Drehzahl von dem Drehzahlsensor an das Frequenzanalysemodul übermittelt. Das Frequenzanalysemodul ermittelt aus dem übermittelten Zeitverlauf der Drehzahl die der Schwankungen unterliegenden Frequenzen mitsamt ihrer Amplituden. Das aus der Frequenzanalyse resultierende Frequenzspektrum umfasst eine große Bandbreite an Vielfachen der Drehzahl mit unterschiedlicher Amplitude. Das resultierende Frequenzspektrum wird weiter an das Komparatorelement übermittelt. Das Komparatorelement verfügt über ein Normfrequenzspektrum, das einem Spektrum entspricht, in dem keine Schwingungen aufgrund von beschädigten Generatorkomponenten auftreten. Durch den Vergleich ermittelt das Komparatorelement die Frequenzen und die Amplituden der Schwingungen, die von dem Normfrequenzspektrum abweichen. Das Komparatorelement ist dazu ausgebildet anhand dieser Frequenzen und der Amplituden, eine Diagnose über mechanisch beschädigte Generatorkomponenten zu treffen. Obwohl mit den aus der Drehzahl gebildeten Frequenzspektren an sich nur eine rotatorische Bewegung erfasst ist, sind überraschenderweise in dem besagten breitbandigen Frequenzspektrum auch axiale Schwingungen enthalten. Sie können erfasst und durch Vergleich mit dem Normfrequenzspektrum klassifiziert werden.

Damit ermöglicht die Erfindung eine frühzeitigere Diagnose von mechanischen Beschädigungen der Generatorkomponenten.

Weiter sind die auftretenden Schwingungen unabhängig von der Drehzahl des Generators. Die Schwingungen treten bei niedrigen wie bei hohen Drehzahlen auf. Damit kann die Frequenzanalyse jederzeit durchgeführt werden und deren Ergebnis ist invariant gegenüber Drehzahländerungen. Weiter bedeutet dies, dass das Ergebnis der Frequenzanalyse auch bei stark veränderlichen Windbedingungen durchgeführt werden kann, die große Änderungen in der Drehzahl hervorrufen.

Vorzugsweise ist das Frequenzanalysemodul als Fast-Fourier-Transformations-Modul (FFT-Modul) ausgebildet, d.h. dass das Frequenzanalysemodul die Frequenzanalyse mittels einer Fast-Fourier-Transformation durchführt. Durch die Nutzung der FFT bei der Erstellung der Frequenzspektren kann die Fourier-Transformation der Drehzahl sehr schnell durchgeführt werden. Damit kann der mechanische Zustand der Generatorkomponenten ständig überwacht werden, so dass eine frühzeitige Kontrolle bei auffälligem Schwingungsverhalten durchgeführt werden kann. Dies ermöglicht einen frühzeitig planbaren Austausch von beschädigten Generatorkomponenten bevor gravierende Maschinenschäden auftreten. Damit werden längere Ausfälle des Generators vermieden, so dass die Ausfallkosten sinken.

Zweckmäßigerweise weist die Windenergieanlagen-Diagnosevorrichtung einen Selektor mit mindestens einem Steuersignalausgang auf, der zur Auswahl eines Drehzahlsensors aus den Drehzahlsensoren mehrerer Windenergieanlagen ausgebildet ist und zur Ansteuerung des Drehzahlsensors zur Ausgabe der Daten ausgebildet ist, wobei der Drehzahlsensor zur Ausgabe des ermittelten Zeitverlaufs der Drehzahl über den Drehzahlsignalausgang auf die Ansteuerung durch den Selektor ausgebildet ist. Mittels des Selektors kann eine gezielte Diagnose einer bestimmten Windenergieanlage aus einer Vielzahl von Windenergieanlagen durchgeführt werden. Auf diese Weise kann mit nur einem Frequenzanalysemodul und einem Komparatorelement die Diagnose eines ganzen Windparks erfolgen.

Vorteilhafterweise umfasst das Komparatorelement ein Differenzmodul, das zur Bestimmung der Differenz zwischen dem Frequenzspektrum und dem Normfrequenzspektrum ausgebildet ist. Mittels des Differenzmoduls kann die Bestimmung der Abweichungen zwischen dem Frequenzspektrum und dem Normfrequenzspektrum effizient durchgeführt werden. Dies beschleunigt die Ermittlung von Beschädigungen an den Generatorkomponenten weiter.

Mit Vorteil umfasst das Komparatorelement einen Fehlersignalausgang, wobei das Komparatorelement zur Ausgabe eines Fehlersignals mittels des Fehlersignalausgangs ausgebildet ist, wenn die Abweichung zwischen dem Frequenzspektrum und dem vorgegebenen Normfrequenzspektrum einen vorbestimmten Grenzwert überschreitet, wobei das Fehlersignal einen Verweis auf die zu kontrollierenden Generatorkomponenten umfasst. Damit wird dem Komparatorelement ermöglicht, die zu kontrollierenden beschädigten Generatorkomponenten an eine elektronische Datenverarbeitung weiterzuleiten.

Dazu kann zweckmäßigerweise ein Fehlermodul mit einem Fehlersignaleingang vorgesehen sein, wobei der Fehlersignaleingang mit dem Fehlersignalausgang über eine Fehlersignalleitung verbunden ist und das Fehlermodul zur Meldung der zu kontrollierenden Generatorkomponenten anhand des Diagnosesignals ausgebildet ist. Das Fehlermodul kann dabei mit Vorteil einen Bildschirm umfassen, auf dem die zu kontrollierenden Generatorkomponenten markiert oder angezeigt werden können.

Weiter ist die Generatorkomponente vorteilhafterweise ein Schleifring eines Generators. Beschädigungen an den Schleifringen der Generatoren bewirken sehr gravierende Folgeschäden, so dass ein rechtzeitiger Austausch beschädigter Schleifringe eine hohe Kostenersparnis bewirkt.

Es ist weiter zweckmäßig, wenn das Komparatorelement ein Unwuchtmodul umfasst, das zur Erkennung von Unwuchten in den Generatorkomponenten ausgebildet ist. Durch die frühe Erkennung von Unwuchten können die Generatorkomponenten gezielt kontrolliert werden, so dass Folgeschäden, die auch Schäden an den Schleifringen umfassen können, vermieden werden.

Zweckmäßigerweise weist das Komparatorelement ein Oberschwingungsmodul auf, das zur Durchführung des Vergleichs auf Basis der Vielfachen der Drehzahl im Frequenzspektrum ausgebildet und vorzugsweise einen Eingang für die Ordnung der zu überwachenden Oberschwingungen umfasst. Es hat sich gezeigt, dass die meisten Beschädigungen Schwingungen verursachen, die Vielfache der Drehzahl sind. Damit kann der Vergleich noch schneller durchgeführt werden.

Vorteilhafterweise ist ein Schwingungssensor zur Messung von Schwingungen an Generatorlagern mit einem Schwingungssignalausgang vorgesehen, wobei das Komparatorelement einen Schwingungssignaleingang umfasst, der mit dem Schwingungssignalausgang über eine Schwingungssignalleitung verbunden ist, wobei das Komparatorelement zur Berücksichtigung des Schwingungssignals bei der Diagnose ausgebildet ist. Damit wirken das Komparatorelement und der Schwingungssensor so zusammen, dass die vor allem radialen Schwingungen an den Generatorlagern bei der Diagnose über beschädigte Generatorkomponenten in Verbindung mit den aus dem Frequenzspektrum ermittelten Schwingungen gebracht werden können. Damit wird die Genauigkeit der Diagnose weiter erhöht.

Die Erfindung bezieht sich weiter auf einen Generator für eine Windenergieanlage, der eine Windenergieanlagen-Diagnosevorrichtung zur Diagnose von mechanischen Schäden an Generatorkomponenten einer Windenergieanlage aufweist, wobei bei der Windenergieanlagen-Diagnosevorrichtung umfassend einen Drehzahlsensor zur Ermittlung eines Zeitverlaufs der Drehzahl eines Generators einer Windenergieanlage, wobei der Drehzahlsensor mindestens einen Drehzahlsignalausgang zur Ausgabe des ermittelten Zeitverlaufs der Drehzahl aufweist, erfindungsgemäß vorgesehen ist, dass die Windenergieanlagen-Diagnosevorrichtung ein Frequenzanalysemodul mit mindestens einem Drehzahlsignaleingang, der mit dem Drehzahlsignalausgang über eine Drehzahlsignalleitung verbunden ist, und einem Frequenzspektrumsignalausgang zur Ausgabe eines Frequenzspektrums, wobei das Frequenzanalysemodul zur Bestimmung eines Frequenzspektrums aus dem ermittelten Zeitverlauf der Drehzahl ausgebildet ist; und ein Komparatorelement aufweist, das einen Frequenzspektrumsignaleingang aufweist, der mit dem Frequenzspektrumsignalausgang über eine Frequenzspektrumsignalleitung verbunden ist, wobei das Komparatorelement zum Vergleich eines Frequenzspektrums mit einem vorgegebenen Normfrequenzspektrum und zur Diagnose von mechanischen Schäden an Generatorkomponenten auf Grund des Vergleichs ausgebildet ist.

Die Windenergieanlagen-Diagnosevorrichtung ist dabei in den Generator integriert. Damit kann das Komparatorelement der Windenergieanlagen-Diagnosevorrichtung ab Werk auf den Generator abgestimmt werden, so dass eine Diagnose mit hoher Genauigkeit ermöglicht wird.

Weiter umfasst die Erfindung eine Windenergieanlage, die einen Generator und eine Windenergieanlagen-Diagnosevorrichtung zur Diagnose von mechanischen Schäden an Generatorkomponenten einer Windenergieanlage aufweist, wobei bei der Windenergieanlagen-Diagnosevorrichtung umfassend einen Drehzahlsensor zur Ermittlung eines Zeitverlaufs der Drehzahl eines Generators einer Windenergieanlage, wobei der Drehzahlsensor mindestens einen Drehzahlsignalausgang zur Ausgabe des ermittelten Zeitverlaufs der Drehzahl aufweist, erfindungsgemäß vorgesehen ist, dass die Windenergieanlagen-Diagnosevorrichtung ein Frequenzanalysemodul mit mindestens einem Drehzahlsignaleingang, der mit dem Drehzahlsignalausgang über eine Drehzahlsignalleitung verbunden ist, und einem Frequenzspektrumsignalausgang zur Ausgabe eines Frequenzspektrums, wobei das Frequenzanalysemodul zur Bestimmung eines Frequenzspektrums aus dem ermittelten Zeitverlauf der Drehzahl ausgebildet ist; und ein Komparatorelement aufweist, das einen Frequenzspektrumsignaleingang aufweist, der mit dem Frequenzspektrumsignalausgang über eine Frequenzspektrumsignalleitung verbunden ist, wobei das Komparatorelement zum Vergleich eines Frequenzspektrums mit einem vorgegebenen Normfrequenzspektrum und zur Diagnose von mechanischen Schäden an Generatorkomponenten auf Grund des Vergleichs ausgebildet ist.

In dieser Alternative der Erfindung ist die Windenergieanlagen-Diagnosevorrichtung getrennt vom Generator in der Windenergieanlage vorgesehen. Damit wird ermöglicht, die Windenergieanlagen-Diagnosevorrichtung in eine bereits bestehende Windenergieanlage nachzurüsten.

Bezüglich der Weiterbildungen der Windenergieanlagen-Diagnosevorrichtung an dem erfindungsgemäßen Generator und der erfindungsgemäßen Windenergieanlage wird auf vorangegangene Ausführungen verwiesen.

Weiter betrifft die Erfindung ein Verfahren zur Diagnose von mechanischen Schäden an Generatorkomponenten einer Windenergieanlage umfassend die Schritte: Ermittlung einer Zeitreihe der Drehzahl des Generators, wobei erfindungsgemäß folgende Schritte vorgesehen sind: Bestimmung eines Frequenzspektrums der Drehzahl; Vergleich des Frequenzspektrums mit einem vorgegebenen Normfrequenzspektrum; und Bestimmung von mechanischen Schäden an Generatorkomponenten auf Grund des Vergleichs.

Das Verfahren kann vorteilhafterweise mit einer oben beschriebenen Windenergieanlagen-Diagnosevorrichtung durchgeführt werden.

Die Erfindung wird anhand eines Ausführungsbeispiels näher erläutert, welches in den Zeichnungen dargestellt ist. Es zeigen:
- Fig. 1: eine schematische Darstellung einer Windenergieanlage mit einer Windenergieanlagen-Diagnosevorrichtung;
- Fig. 2: eine schematische Darstellung eines Windparks mit einem Selektor und einer Windenergieanlagen-Diagnosevorrichtung;
- Fig. 3: eine schematische Darstellung eines Generators mit einer Windenergieanlagen-Diagnosevorrichtung;
- Fig. 4: eine schematische Darstellung einer Windenergieanlagen-Diagnosevorrichtung;
- Fig. 5a, b: ein Frequenzspektrum einer beschädigten (a) und einer erneuerten (b) Generatorkomponente eine ersten Windenergieanlage; und
- Fig. 6a, b: ein Frequenzspektrum einer beschädigten (a) und einer erneuerten (b) Generatorkomponente einer zweiten Windenergieanlage.

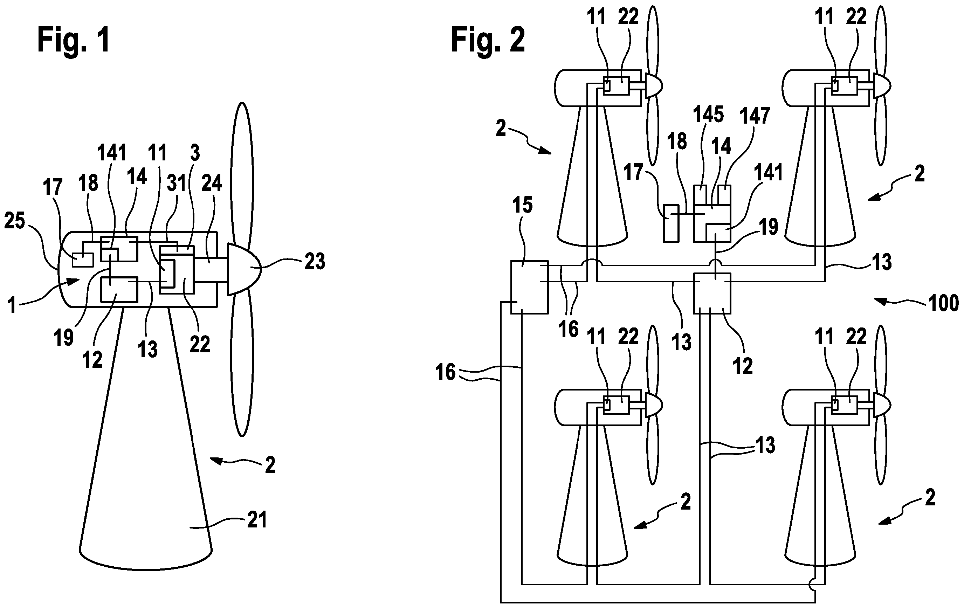

Gemäß Figur 1 wird eine Windenergieanlage dargestellt, die in ihrer Gesamtheit mit dem Bezugszeichen 2 bezeichnet ist, mit einem Turm 21, einer auf dem Turm angeordneten Gondel 25, einem drehbar an einer Stirnseite der Gondel 25 gelagerten Rotor 23, der über eine Welle 24, die ein Getriebe umfassen kann (nicht gezeigt), mit einem Generator 22 verbunden ist. Der Generator 22 kann als ein Synchron- oder Asynchrongenerator ausgestaltet sein.

Der Generator 22 umfasst Generatorkomponenten 221, die aufgrund der Drehung der Welle 24 mechanischen Belastungen ausgesetzt werden. In diesem Ausführungsbeispiel ist die Generatorkomponente 221 ein Schleifring. An der Windenergieanlage 2 ist weiter eine Windenergieanlagen-Diagnosevorrichtung vorgesehen, die in ihrer Gesamtheit mit dem Bezugszeichen 1 gekennzeichnet ist. Die Windenergieanlagen-Diagnosevorrichtung 1 umfasst einen Drehzahlsensor 11, der die Drehung der Welle 24 des Generators 21 überwacht.

Der Drehzahlsensor 11 ist ausgebildet, eine Zeitreihe über die Drehzahl zu erstellen und zu speichern. Zur Speicherung umfasst der Drehzahlsensor 11 eine Speicherkomponente 113. Weiter weist der Drehzahlsensor einen Drehzahlsignalausgang 111 auf. Die Windenergieanlagen-Diagnosevorrichtung 1 umfasst weiter ein Frequenzanalysemodul 12, das mindestens einen Drehzahlsignaleingang 121 umfasst. Der Drehzahlsignalausgang 111 und der Drehzahlsignaleingang 121 sind über eine Drehzahlsignalleitung 13 miteinander verbunden. Die von dem Drehzahlsensor 11 ermittelte Zeitreihe über die Drehzahl kann aus der Speicherkomponente 113 ausgelesen werden und über den Drehzahlsignalausgang 111 über die Drehzahlsignalleitung 13 und den Drehzahlsignaleingang 121 zum Frequenzanalysemodul 12 übermittelt werden. Das Frequenzanalysemodul 12 berechnet aus der Zeitreihe über die Drehzahl ein Frequenzspektrum auf an sich bekannte Weise mittels einer Fast-Fourier-Transformation.

Weiter weist die Windenergieanlagen-Diagnosevorrichtung 1 ein Komparatorelement 14 auf. Das berechnete Frequenzspektrum wird von dem Frequenzanalysemodul 12 an das Komparatorelement 14 übermittelt. Dazu weist das Frequenzanalysemodul 12 einen Frequenzspektrumsignalausgang 122 auf. Der Frequenzspektrumsignalausgang 122 ist über eine Frequenzspektrumsignalleitung 19 mit einem Frequenzspektrumsignaleingang 142 des Komparatorelements 14 verbunden.

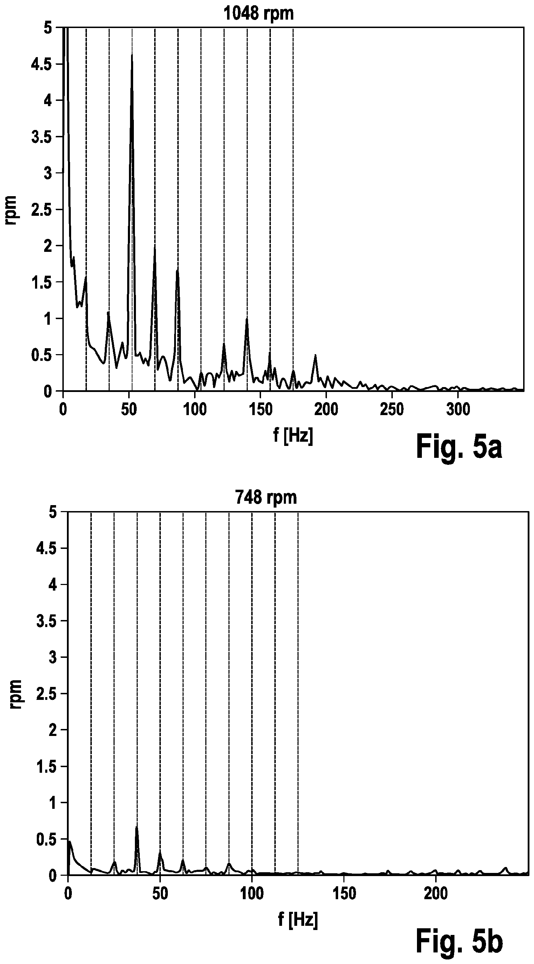

Das Komparatorelement 14 weist ein Normfrequenzspektrum auf, das dem Frequenzspektrum eines unbeschädigten Generators 22 entspricht. Das von dem Frequenzanalysemodul 12 übermittelte berechnete Frequenzspektrum wird von dem Komparatorelement 14 mit dem Normfrequenzspektrum verglichen. Fig. 5a zeigt ein Frequenzspektrum eines Generators 22, der beschädigte Generatorkomponenten 221 aufweist. Die Drehzahl des Generators 22 lag bei 1048 Umdrehungen/min (rpm). Die Drehzahlfrequenz ist ganz links im Frequenzspektrum in Figur 5a bei 1048 rpm / 60 = 17,47 rps (Umdrehungen/s) = 17,47 Hz als gestrichelte senkrechte Linie markiert. Die weiteren gestrichelten senkrechten Linien im Frequenzspektrum rechts von der Drehzahlfrequenz sind die Vielfachen der Drehzahlfrequenz.

Das Frequenzspektrum zeigt außer bei der Drehzahlfrequenz selbst bei den 2. bis 5., 7. und 8. Vielfachen der Drehzahlfrequenz deutliche Amplituden. Diese Amplituden deuten auf eine Beschädigung einer Generatorkomponente 221 insbesondere des Schleifrings hin. Eine Kontrolle des Schleifrings führte zum Austausch des Schleifrings.

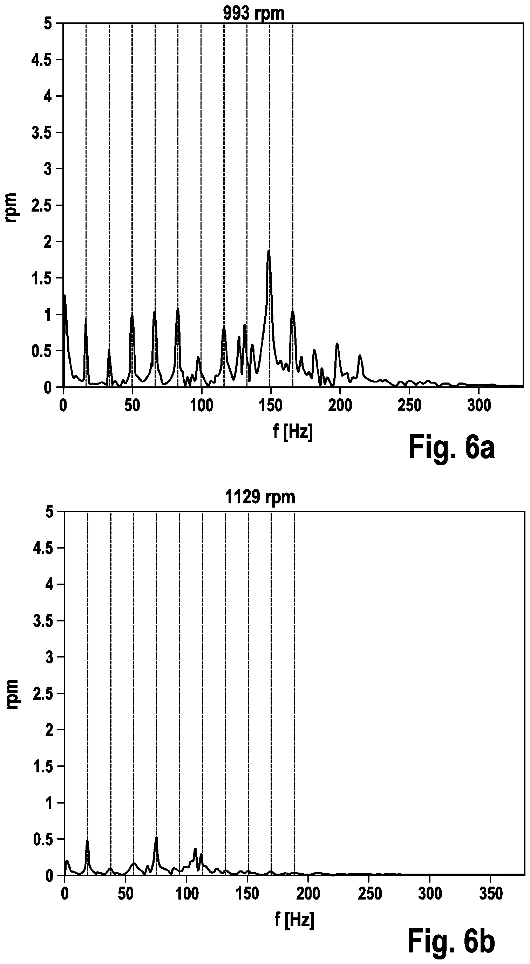

Nach dem Austausch des Schleifrings wurde eine weitere Diagnose durchgeführt, die ein Frequenzspektrum gemäß Fig. 5b ergab. Die Diagnose wurde bei einer Generatordrehzahl von 748 Umdrehungen/min durchgeführt. Wie in Fig. 5a sind die Drehzahlfrequenz sowie die Vielfachen der Drehzahlfrequenz als gestrichelte senkrechte Linien in das Frequenzspektrum eingezeichnet. Es sind deutliche Unterschiede in den Amplituden zwischen dem Frequenzspektrum gemäß Fig. 5a und dem Frequenzspektrum gemäß Fig. 5b zu erkennen. Schwingungen, die große Amplituden an den Vielfachen der Generatordrehzahl verursachen, sind nicht mehr vorhanden. Lediglich eine kleine Amplitude an dem 3. bis 5. Vielfachen der Drehzahlfrequenz ist noch vorhanden. Diese Amplituden weisen auf Unwuchten in weiteren Generatorkomponenten 221 hin. In den Figuren 6a und 6b ist ein weiteres Beispiel für ein Frequenzspektrum dargestellt, das vor (Fig. 6a) und nach (Fig. 6b) dem Austausch eines Schleifrings ermittelt wurde. Auch hier sind deutliche Unterschiede zwischen dem Frequenzspektrum vor dem Austausch und dem Frequenzspektrum nach dem Austausch zu erkennen. Die verbleibenden Amplituden in Figur 6b weisen wiederum auf Unwuchten in weiteren Generatorkomponenten 221 hin.

Zur Erleichterung und Beschleunigung des Vergleichs weist das Komparatorelement 14 ein Differenzmodul 141 auf, das die Differenz zwischen dem berechneten Frequenzspektrum und dem Normfrequenzspektrum ermittelt. Das Komparatorelement 14 kann mittels der Differenz zwischen dem berechneten Frequenzspektrum und dem Normfrequenzspektrum beschädigte Generatorkomponenten 221 schnell erkennen.

Zur Erkennung von Unwuchten weist das Komparatorelement 14 ein Unwuchtmodul 147 auf. Das Unwuchtmodul 147 ist dazu ausgebildet, aus dem Frequenzspektrum Unwuchten in den Generatorkomponenten 221 zu ermitteln.

Weiter weist das Komparatorelement 14 ein Oberschwingungsmodul 145 auf, das den Vergleich auf Basis der Vielfachen der Drehzahl des Generators durchführt. Das Oberschwingungsmodul 145 weist dazu einen Eingang 146 für die Ordnung der zu überwachenden Oberschwingungen auf. Mittels des Eingangs 146 kann das Oberschwingungsmodul 145 zur Auswertung bestimmter Oberschwingungen im Frequenzspektrum eingestellt werden. Damit wird eine genauere Analyse ermöglicht.

Die Windenergieanlagen-Diagnosevorrichtung 1 umfasst weiter ein Fehlermodul 17, das die Beschädigung von Generatorkomponenten 221 meldet. Dazu weist das Fehlermodul einen Fehlersignaleingang 171 auf, der über eine Fehlersignalleitung 18 mit einem Fehlersignalausgang 143 des Komparatorelements 14 verbunden ist. Das Komparatorelement 14 übermittelt dem Fehlermodul 17 über eine Fehlersignalleitung 18 eine Liste der Generatorkomponenten 221, die gemäß der durchgeführten Diagnose eine Beschädigung aufweisen. Das Fehlermodul 17 markiert die Generatorkomponenten 221, die von dem Komparatorelement 14 als beschädigt gemeldet wurden. Dazu weist das Fehlermodul 17 einen Monitor 172 auf, der eine Liste der beschädigten Generatorkomponenten 221 ausgibt. Alternativ kann der Monitor 172 eine grafische Darstellung der Generatorkomponenten 221 abbilden und die beschädigten Generatorkomponenten 221 grafisch markieren.

Die Windenergieanlagen-Diagnosevorrichtung 1 weist weiter einen Schwingungssensor 3 auf, der Schwingungen am Generatorlager aufnimmt. Der Schwingungssensor 3 ist radial von der Achse des Generators 22 positioniert. Damit nimmt der Schwingungssensor 3 hauptsächlich radiale Schwingungen des Generators 22 auf. Der Schwingungssensor 3 umfasst einen Schwingungssignalausgang 32, der über eine Schwingungssignalleitung 31 mit einem Schwingungssignaleingang 144 am Komparatorelement 14 verbunden ist. Der Schwingungssensor 3 übermittelt über die Schwingungssignalleitung 31 dem Komparatorelement 14 die Frequenz und die Amplitude der radialen Schwingungen. Das Komparatorelement 14 verwendet die von dem Schwingungssensor 3 übermittelten Daten über die Frequenz und Amplitude der radialen Schwingungen, um die Genauigkeit der Diagnose über die beschädigten Generatorkomponenten 221 zu erhöhen. So kann beispielsweise beim Auftreten von radialen Schwingungen in den Generatorlagern und gleichzeitigen Auffälligkeiten in dem Frequenzspektrum der Drehzahl sicher ein Schleifringdefekt diagnostiziert werden.

Weiter weist die Windenergieanlagen-Diagnosevorrichtung 1 einen Selektor 15 auf, der mindestens einen Steuersignalausgang 151 umfasst. Der Steuersignalausgang 151 ist über eine Steuersignalleitung 16 mit einem Steuersignaleingang 112 am Drehzahlsensor 11 verbunden. Der Drehzahlsensor 11 ist dabei so ausgebildet, dass er die ermittelte Zeitreihe über die Drehzahl an das Komparatorelement 14 ausgibt, wenn der Selektor 15 ein Steuersignal übermittelt. Der Selektor 15 kann dabei mit einer Vielzahl von Drehzahlsensoren 11 verschiedener Windenergieanlagen 2, die zu einem Windpark 100 zusammengefasst sind, verbunden sein. Dabei weist jeder Drehzahlsensor 11 einen Steuersignaleingang 112 auf, der mit einem der Steuersignalausgänge 151 des Selektors 15 über eine separate Steuersignalleitung 16 verbunden ist. Der Selektor 15 kann damit die Drehzahlsensoren 11 verschiedener Windenergieanlagen 2 separat ansteuern. Damit können verschiedene Windenergieanlagen 2 zu verschiedenen Zeitpunkten einer Diagnose unterzogen werden. Weiter weist das Frequenzanalysemodul 12 in einer zu der oben beschriebenen alternativen Ausführungsform mehrere Drehzahlsignaleingänge 121 auf. Die Drehzahlsignaleingänge 121 sind mit den Drehzahlsignalausgängen 111 der vorgenannten Drehzahlsensoren 11 verschiedener Windenergieanlagen 2 eines Windparks 100 verbunden. Das Frequenzanalysemodul 12 erhält damit jeweils eine Zeitreihe über die Drehzahl einer bestimmten Windenergieanlage 2, deren Drehzahlsensor 11 von dem Selektor 15 angesteuert wurde. Damit wird für mehrere Windenergieanlagen 2 lediglich eine Windenergieanlagen-Diagnosevorrichtung 1 mit mehreren Drehzahlsensoren 11 benötigt. Es sind lediglich ein einziges Frequenzanalysemodul 12, ein einziges Komparatorelement 14, sowie ein einziges Fehlermodul 17 nötig, um den gesamten Windpark 100 zu überprüfen.

Weiter können die Signalleitungen 13, 16, 18, 31 als Funkverbindungen ausgestaltet sein. Damit werden aufwändige Montagearbeiten für die Signalleitungen vermieden.

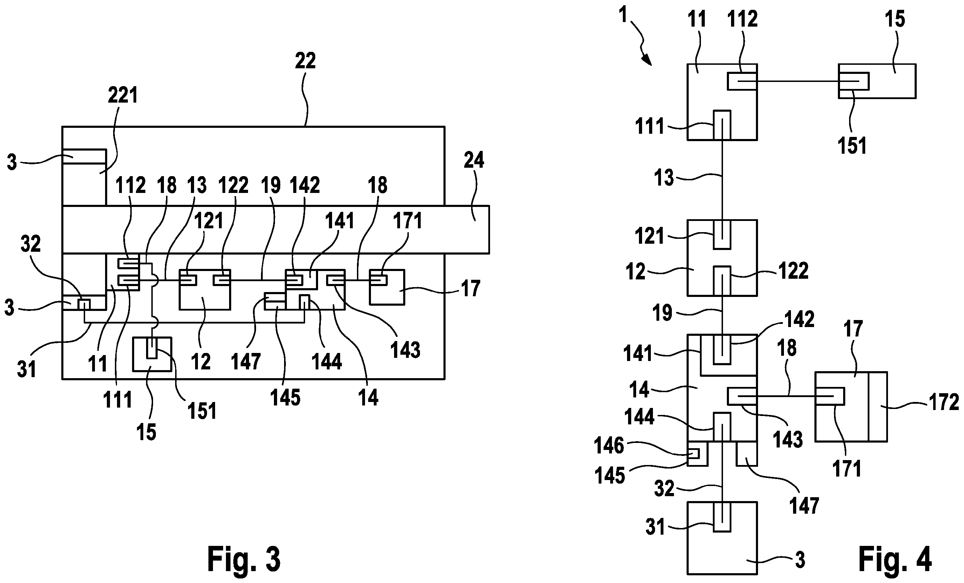

Die Windenergieanlagen-Diagnosevorrichtung 1 kann in einer weiteren alternativen Ausführungsform gemäß Figur 3 vollständig in einen Generator 22 integriert sein. Dabei sind der Drehzahlsensor 11, das Frequenzanalysemodul 12, das Komparatorelement 14 sowie das Fehlermodul 17 in den Generator 23 integriert. Auch ein Steuerelement 15 kann vorgesehen sein. Damit kann der Generator 22 einer Windenergieanlage 2 eine vollständige Windenergieanlagen-Diagnosevorrichtung 1 umfassen, wobei die Windenergieanlagen-Diagnosevorrichtung 1 für den gesamten Windpark 100, in dem die Windenergieanlage 2 positioniert ist, verwendet wird. Mittels des erfinderischen Generators 22 kann ein Windpark 100 auf einfache Weise mit einer Windenergieanlagen-Diagnosevorrichtung 1 ausgerüstet werden.

Das erfindungsgemäße Verfahren zur Diagnose von mechanischen Schäden an Generatorkomponenten einer Windenergieanlage erfolgt durch die folgenden Schritte:
Zuerst wird die Drehzahl des Generators 22 ermittelt, indem zum Beispiel ein Inkrementalgeber eines Umrichters einer Windenergieanlage 2 ausgelesen wird. Auf diese Weise wird eine Zeitreihe über die Drehzahl ermittelt. Aus der Zeitreihe über die Drehzahl wird in einem weiteren Schritt das Frequenzspektrum der Drehzahl bestimmt. Dazu kann eine Fast-Fourier-Transformation genutzt werden. Alternativ kann auf eine herkömmliche Fourier-Transformation zurückgegriffen werden. Das ermittelte Frequenzspektrum der Drehzahl wird analysiert und mit einem vorgegebenen Normfrequenzspektrum verglichen. Das Normfrequenzspektrum ist dabei ein Frequenzspektrum einer Windenergieanlage 2, die keine beschädigten Generatorkomponenten 221 aufweist. In einem letzten Schritt werden aufgrund des Vergleichs beschädigte Generatorkomponenten 221 bestimmt. Bei dem Vergleich werden die Abweichungen zwischen dem berechneten Frequenzspektrum und dem Normfrequenzspektrum bestimmt und aus diesen Abweichungen Rückschlüsse auf die möglichen Ursachen der zusätzlichen Schwingungen getroffen. Damit können Schäden an den Generatorkomponenten 221 sicher diagnostiziert werden.

Das Verfahren kann in einer ersten bevorzugten Ausführungsform mittels der vorbeschriebenen Windenergieanlagen-Diagnosevorrichtung 1 durchgeführt werden. Alternativ kann das Verfahren jedoch auch ohne die Windenergieanlagen-Diagnosevorrichtung 1 durchgeführt werden. Dazu wird die Zeitreihe über die Drehzahl manuell ausgelesen und nach einer Fourier-Transformation eine manuelle Analyse der Frequenzspektren durchgeführt.

## Patentansprüche

1. Windenergieanlagen-Diagnosevorrichtung zur Diagnose von mechanischen Schäden an Generatorkomponenten (221) mindestens einer Windenergieanlage (2) umfassend,
mindestens einen Drehzahlsensor (11) zur Ermittlung eines Zeitverlaufs der Drehzahl eines Generators (22) einer Windenergieanlage (2), wobei der Drehzahlsensor (11) mindestens einen Drehzahlsignalausgang (111) zur Ausgabe des ermittelten Zeitverlaufs der Drehzahl aufweist,
**dadurch gekennzeichnet, dass**
die Windenergieanlagen-Diagnosevorrichtung (1) ein Frequenzanalysemodul (12) mit mindestens einem Drehzahlsignaleingang (121), der mit dem Drehzahlsignalausgang (111) über eine Drehzahlsignalleitung (13) verbunden ist, und einem Frequenzspektrumsignalausgang (122) zur Ausgabe eines Frequenzspektrums, wobei das Frequenzanalysemodul (12) zur Bestimmung eines Frequenzspektrums aus dem ermittelten Zeitverlauf der Drehzahl ausgebildet ist; und
ein Komparatorelement (14) aufweist, das einen Frequenzspektrumsignaleingang (142) umfasst, der mit dem Frequenzspektrumsignalausgang (122) über eine Frequenzspektrumsignalleitung (19) verbunden ist, wobei das Komparatorelement (14) zum Vergleich eines Frequenzspektrums mit einem vorgegebenen Normfrequenzspektrum und zur Diagnose von mechanischen Schäden an Generatorkomponenten (221) auf Grund des Vergleichs ausgebildet ist.

2. Windenergieanlagen-Diagnosevorrichtung nach Anspruch 1,
**dadurch gekennzeichnet, dass**
das Frequenzanalysemodul (12) zur Durchführung einer Frequenzanalyse mittels einer Fast-Fourier-Transformation ausgebildet ist.

3. Windenergieanlagen-Diagnosevorrichtung nach Anspruch 1 oder 2,
**dadurch gekennzeichnet, dass**
die Windenergieanlagen-Diagnosevorrichtung (1) einen Selektor (15) mit mindestens einem Steuersignalausgang (151) aufweist, der zur Auswahl eines Drehzahlsensors (11) aus den Drehzahlsensoren (11) mehrerer Windenergieanlagen (2) ausgebildet ist und zur Ansteuerung des Drehzahlsensors (11) zur Ausgabe der Daten ausgebildet ist, wobei der Drehzahlsensor (11) zur Ausgabe des ermittelten Zeitverlaufs der Drehzahl über den Drehzahlsignalausgang (111) auf die Ansteuerung durch den Selektor (15) ausgebildet ist.

4. Windenergieanlagen-Diagnosevorrichtung nach den Ansprüchen 1 bis 3,
**dadurch gekennzeichnet, dass**
das Komparatorelement (14) ein Differenzmodul (141) aufweist, das zur Bestimmung der Differenz zwischen dem Frequenzspektrum und dem Normfrequenzspektrum ausgebildet ist.

5. Windenergieanlagen-Diagnosevorrichtung nach den Ansprüchen 1 bis 4,
**dadurch gekennzeichnet, dass**
das Komparatorelement (14) einen Fehlersignalausgang (143) aufweist, wobei das Komparatorelement (14) zur Ausgabe eines Fehlersignals mittels des Fehlersignalausgangs (143) ausgebildet ist, wenn die Abweichung zwischen dem Frequenzspektrum und dem vorgegebenen Normfrequenzspektrum einen vorbestimmten Grenzwert überschreitet, wobei das Fehlersignal einen Verweis auf die zu kontrollierenden Generatorkomponenten (221) umfasst.

6. Windenergieanlagen-Diagnosevorrichtung nach Anspruch 5,
**dadurch gekennzeichnet, dass**
die Windenergieanlagen-Diagnosevorrichtung (1) ein Fehlermodul (17) mit einem Fehlersignaleingang (171) aufweist, wobei der Fehlersignaleingang (171) mit dem Fehlersignalausgang (143) über eine Fehlersignalleitung (18) verbunden ist und das Fehlermodul (17) zur Meldung der zu kontrollierenden Generatorkomponenten (221) anhand des Fehlersignals ausgebildet ist.

7. Windenergieanlagen-Diagnosevorrichtung nach den Ansprüchen 1 bis 6,
**dadurch gekennzeichnet, dass**
die Generatorkomponente (221) ein Schleifring eines Generators (22) ist.

8. Windenergieanlagen-Diagnosevorrichtung nach den Ansprüchen 1 bis 7,
**dadurch gekennzeichnet, dass**
das Komparatorelement (14) ein Unwuchtmodul (147) umfasst, das zur Erkennung von Unwuchten in den Generatorkomponenten (221) ausgebildet ist.

9. Windenergieanlagen-Diagnosevorrichtung nach den Ansprüchen 1 bis 8,
**dadurch gekennzeichnet, dass**
das Komparatorelement (14) ein Oberschwingungsmodul (145) aufweist, das zur Durchführung des Vergleichs auf Basis der Vielfachen der Drehzahl im Frequenzspektrum ausgebildet ist und vorzugsweise einen Eingang (146) für die Ordnung der zu überwachenden Oberschwingungen umfasst.

10. Windenergieanlagen-Diagnosevorrichtung nach den Ansprüchen 1 bis 9,
**dadurch gekennzeichnet, dass**
die Windenergieanlagen-Diagnosevorrichtung (1) einen Schwingungssensor (3) zur Messung von Schwingungen an Generatorlagern, wobei der Schwingungssensor (3) einen Schwingungssignalausgang (32) aufweist, wobei das Komparatorelement (14) einen Schwingungssignaleingang (144) umfasst, der mit dem Schwingungssignalausgang (32) über eine Schwingungssignalleitung (31) verbunden ist, wobei das Komparatorelement (14) zur Klassifizierung des Schwingungssignals, zur Korrelationsauswertung der Drehzahl in Bezug auf das klassifizierte Schwingungssignal und zur Berücksichtigung der Korrelationsauswertung bei der Diagnose ausgebildet ist.

11. Generator für eine Windenergieanlage (2), **dadurch gekennzeichnet, dass** der Generator eine Windenergieanlagen-Diagnosevorrichtung (1) gemäß Anspruch 1 aufweist.

12. Generator nach Anspruch 11,
**dadurch gekennzeichnet, dass**
die Windenergieanlagen-Diagnosevorrichtung (1) nach einem der Ansprüche 2 bis 10 weitergebildet ist.

13. Windenergieanlage umfassend einen Generator (22),
**dadurch gekennzeichnet, dass** die Windenergieanlage eine Windenergieanlagen-Diagnosevorrichtung (1) gemäß Anspruch 1 aufweist.

14. Windenergieanlage nach Anspruch 13,
**dadurch gekennzeichnet, dass**
die Windenergieanlagen-Diagnosevorrichtung (1) nach einem der Ansprüche 2 bis 10 weitergebildet ist.

15. Verfahren zur Diagnose von mechanischen Schäden an Generatorkomponenten (221) einer Windenergieanlage (2) umfassend die Schritte:
a. Ermittlung einer Zeitreihe der Drehzahl eines Generators (22);
**gekennzeichnet durch**,
b. Bestimmung eines Frequenzspektrums der Drehzahl;
c. Vergleich des Frequenzspektrums mit einem vorgegebenen Normfrequenzspektrum; und
d. Bestimmung von mechanischen Schäden an Generatorkomponenten (221) auf Grund des Vergleichs.

16. Verfahren nach Anspruch 15,
**dadurch gekennzeichnet, dass**
das Verfahren mit einer Windenergieanlagen-Diagnosevorrichtung (1) nach einem der Ansprüche 1 bis 10 durchgeführt wird.

## Claims

1. Wind turbine diagnostic device for diagnosing mechanical damage to generator components (221) of at least one wind turbine (2), comprising
at least one speed sensor (11) for determining a variation over time of the rotational speed of a generator (22) of a wind turbine (2), the speed sensor (11) having at least one speed signal output (111) for outputting the determined variation over time of the rotational speed,
**characterized in that**
the wind turbine diagnostic device (1) has a frequency analysis module (12) with at least one speed signal input (121), which is connected to the speed signal output (111) by way of a speed signal line (13), and a frequency spectrum signal output (122) for outputting a frequency spectrum, the frequency analysis module (12) being designed for determining a frequency spectrum from the determined variation over time of the rotational speed; and
has a comparator element (14), which comprises a frequency spectrum signal input (142), which is connected to the frequency spectrum signal output (122) by way of a frequency spectrum signal line (19), the comparator element (14) being designed for comparing a frequency spectrum with a prescribed standard frequency spectrum and for diagnosing mechanical damage to generator components (221) on the basis of the comparison.

2. Wind turbine diagnostic device according to Claim 1,
**characterized in that**
the frequency analysis module (12) is designed for carrying out a frequency analysis by means of a fast Fourier transform.

3. Wind turbine diagnostic device according to Claim 1 or 2,
**characterized in that**
the wind turbine diagnostic device (1) has a selector (15) with at least one control signal output (151), which is designed for selecting a speed sensor (11) from the speed sensors (11) of multiple wind turbines (2) and is designed for activating the speed sensor (11) for outputting the data, the speed sensor (11) being designed for outputting the determined variation over time of the rotational speed by way of the speed signal output (111) in response to the activation by the selector (15).

4. Wind turbine diagnostic device according to Claims 1 to 3,
**characterized in that**
the comparator element (14) has a difference module (141), which is designed for determining the difference between the frequency spectrum and the standard frequency spectrum.

5. Wind turbine diagnostic device according to Claims 1 to 4,
**characterized in that**
the comparator element (14) has a fault signal output (143), the comparator element (14) being designed for outputting a fault signal by means of the fault signal output (143) when the deviation between the frequency spectrum and the prescribed standard frequency spectrum exceeds a predetermined limit value, the fault signal comprising a reference to the generator components (221) to be monitored.

6. Wind turbine diagnostic device according to Claim 5,
**characterized in that**
the wind turbine diagnostic device (1) has a fault module (17) with a fault signal input (171), the fault signal input (171) being connected to the fault signal output (143) by way of a fault signal line (18) and the fault module (17) being designed for reporting the generator components (221) to be monitored on the basis of the fault signal.

7. Wind turbine diagnostic device according to Claims 1 to 6,
**characterized in that**
the generator component (221) is a slip ring of a generator (22) .

8. Wind turbine diagnostic device according to Claims 1 to 7,
**characterized in that**
the comparator element (14) comprises an imbalance module (147), which is designed for detecting imbalances in the generator components (221).

9. Wind turbine diagnostic device according to Claims 1 to 8,
**characterized in that**
the comparator element (14) has a harmonic module (145), which is designed for carrying out the comparison on the basis of the multiples of the rotational speed in the frequency spectrum and preferably comprises an input (146) for ordering the harmonics to be monitored.

10. Wind turbine diagnostic device according to Claims 1 to 9,
**characterized in that**
the wind turbine diagnostic device (1) a vibration sensor (3) for measuring vibrations at generator bearings, the vibration sensor (3) having a vibration signal output (32), the comparator element (14) comprising a vibration signal input (144), which is connected to the vibration signal output (32) by way of a vibration signal line (31), the comparator element (14) being designed for classification of the vibration signal, for correlating evaluation of the rotational speed with respect to the classified vibration signal and for taking the correlating evaluation into account in the diagnosis.

11. Generator for a wind turbine (2), **characterized in that** the generator has a wind turbine diagnostic device (1) according to Claim 1.

12. Generator according to Claim 11,
**characterized in that**
the wind turbine diagnostic device (1) is developed according to one of Claims 2 to 10.

13. Wind turbine comprising a generator (22), **characterized in that** the wind turbine has a wind turbine diagnostic device (1) according to Claim 1.

14. Wind turbine according to Claim 13,
**characterized in that**
the wind turbine diagnostic device (1) is developed according to one of Claims 2 to 10.

15. Method for diagnosing mechanical damage to generator components (221) of a wind turbine (2), comprising the steps of:
a.determining a time series of the rotational speed of a generator (22);
**characterized by**
b.determining a frequency spectrum of the rotational speed;
c.comparing the frequency spectrum with a prescribed standard frequency spectrum; and
d. determining mechanical damage to generator components (221) on the basis of the comparison.

16. Method according to Claim 15,
**characterized in that**
the method is carried out with a wind turbine diagnostic device (1) according to one of Claims 1 to 10.

## Revendications

1. Dispositif de diagnostic pour centrales à énergie éolienne destiné à diagnostiquer des dommages mécaniques sur des composants de générateur (221) d'au moins une centrale à énergie éolienne (2), comprenant
au moins un capteur de vitesse de rotation (11) destiné à relever une courbe dans le temps de la vitesse de rotation d'un générateur (22) d'une centrale à énergie éolienne (2), le capteur de vitesse de rotation (11) possédant au moins une sortie de signal de vitesse de rotation (111) servant à délivrer la courbe dans le temps relevée de la vitesse de rotation,
**caractérisé en ce que**
le dispositif de diagnostic pour centrales à énergie éolienne (1) possède un module d'analyse de fréquence (12) pourvu d'au moins une entrée de signal de vitesse de rotation (121), laquelle est reliée à la sortie de signal de vitesse de rotation (111) par le biais d'une ligne de signal de vitesse de rotation (13), et une sortie de signal de spectre de fréquences (122) destinée à délivrer un spectre de fréquences, le module d'analyse de fréquence (12) étant conçu pour déterminer un spectre de fréquences à partir de la courbe dans le temps relevée de la vitesse de rotation ; et
un élément comparateur (14), lequel comporte une entrée de signal de spectre de fréquences (142) qui est reliée à la sortie de signal de spectre de fréquences (122) par le biais d'une ligne de signal de spectre de fréquences (19), l'élément comparateur (14) étant conçu pour comparer un spectre de fréquences à un spectre de fréquences normalisé prédéfini et pour diagnostiquer des dommages mécaniques sur les composants de générateur (221) en se basant sur le résultat.

2. Dispositif de diagnostic pour centrales à énergie éolienne selon la revendication 1,
**caractérisé en ce que**
le module d'analyse de fréquence (12) est conçu pour réaliser une analyse de fréquence au moyen d'une transformation de Fourier rapide.

3. Dispositif de diagnostic pour centrales à énergie éolienne selon la revendication 1 ou 2,
**caractérisé en ce que** le dispositif de diagnostic pour centrales à énergie éolienne (1) possède un sélecteur (15) comprenant au moins une entrée de signal de commande (151), lequel est conçu pour sélectionner un capteur de vitesse de rotation (11) parmi les capteurs de vitesse de rotation (11) de plusieurs centrales à énergie éolienne (2) et conçu pour commander le capteur de vitesse de rotation (11) en vue de la délivrance des données, le capteur de vitesse de rotation (11) étant conçu pour délivrer la courbe dans le temps relevée de la vitesse de rotation par le biais de la sortie de vitesse de rotation (111) en présence de la commande par le sélecteur (15).

4. Dispositif de diagnostic pour centrales à énergie éolienne selon les revendications 1 à 3,
**caractérisé en ce que**
l'élément comparateur (14) possède un module différentiel (141) qui est conçu pour déterminer la différence entre le spectre de fréquences et le spectre de fréquences normalisé.

5. Dispositif de diagnostic pour centrales à énergie éolienne selon les revendications 1 à 4,
**caractérisé en ce que**
l'élément comparateur (14) possède une sortie de signal d'erreur (143), l'élément comparateur (14) étant conçu pour délivrer un signal d'erreur au moyen de la sortie de signal d'erreur (143) lorsque l'écart entre le spectre de fréquences et le spectre de fréquences normalisé prédéfini dépasse une valeur limite prédéterminée, le signal d'erreur comportant une référence aux composants de générateur (221) à contrôler.

6. Dispositif de diagnostic pour centrales à énergie éolienne selon la revendication 5,
**caractérisé en ce que**
le dispositif de diagnostic pour centrales à énergie éolienne (1) possède un module d'erreur (17) comprenant une entrée de signal d'erreur (171), l'entrée de signal d'erreur (171) étant reliée à la sortie de signal d'erreur (143) par le biais d'une ligne de signal d'erreur (18) et le module d'erreur (17) étant conçu pour signaler les composants de générateur (221) à contrôler à l'aide du signal d'erreur.

7. Dispositif de diagnostic pour centrales à énergie éolienne selon les revendications 1 à 6,
**caractérisé en ce que**
le composant de générateur (221) à contrôler est une bague collectrice d'un générateur (22).

8. Dispositif de diagnostic pour centrales à énergie éolienne selon les revendications 1 à 7,
**caractérisé en ce que**
l'élément comparateur (14) comporte un module de déséquilibre (147) qui est conçu pour détecter les déséquilibres dans les composants de générateur (221).

9. Dispositif de diagnostic pour centrales à énergie éolienne selon les revendications 1 à 8,
**caractérisé en ce que**
l'élément comparateur (14) possède un module d'harmonique (145) qui est conçu pour effectuer la comparaison sur la base des multiples de la fréquence de rotation dans le spectre de fréquences et comporte de préférence une entrée (146) pour le rang des harmoniques à surveiller.

10. Dispositif de diagnostic pour centrales à énergie éolienne selon les revendications 1 à 9,
**caractérisé en ce que**
le dispositif de diagnostic pour centrales à énergie éolienne (1) un capteur de vibrations (3) destiné à mesurer des vibrations sur les paliers du générateur, le capteur de vibrations (3) possédant une sortie de signal de vibrations (32), l'élément comparateur (14) comportant une entrée de signal de vibrations (144) qui est reliée à la sortie de signal de vibrations (32) par le biais d'une ligne de signal de vibrations (31), l'élément comparateur (14) étant conçu pour la classification du signal de vibrations, pour l'interprétation de corrélation de la vitesse de rotation en référence au signal de vibrations classifié et pour la prise en compte de l'interprétation de corrélation lors du diagnostic.

11. Générateur pour une centrale à énergie éolienne (2), **caractérisé en ce que** le générateur possède un dispositif de diagnostic pour centrales à énergie éolienne (1) selon la revendication 1.

12. Générateur selon la revendication 11,
**caractérisé en ce que**
le dispositif de diagnostic pour centrales à énergie éolienne (1) est perfectionné selon l'une des revendications 2 à 10.

13. Centrale à énergie éolienne comprenant un générateur (22),
**caractérisée en ce que** la centrale à énergie éolienne possède un dispositif de diagnostic pour centrales à énergie éolienne (1) selon la revendication 1.

14. Centrale à énergie éolienne selon la revendication 13,
**caractérisée en ce que**
le dispositif de diagnostic pour centrales à énergie éolienne (1) est perfectionné selon l'une des revendications 2 à 10.

15. Procédé de diagnostic des dommages mécaniques sur des composants de générateur (221) d'une centrale à énergie éolienne (2), comprenant les étapes suivantes :
a. relevé d'une série chronologique de la vitesse de rotation d'un générateur (22) ;
**caractérisé par**
b. détermination d'un spectre de fréquences de la vitesse de rotation ;
c. comparaison du spectre de fréquences à un spectre de fréquences normalisé prédéfini ; et
d. détermination de dommages mécaniques sur les composants de générateur (221) en se basant sur le résultat.

16. Procédé selon la revendication 15,
**caractérisé en ce que**
le procédé est mis en oeuvre par un dispositif de diagnostic pour centrales à énergie éolienne (1) selon l'une des revendications 1 à 10.
